# EUROPEAN PATENT APPLICATION

(11) **EP 1 914 458 A1**
(43) Date of publication of application: **23.04.2008**
(21) Application number: 06255362.3
(22) Date of filing: 18.10.2006
(51) Int. Cl.: F16K 31/06

(54) **Valve with vibration damping**

(71) Applicant: Varian B.V., 4338 PL Middelburg (NL)
(72) Inventor: Best, Ronald, Middelburg (NL)
(74) Representative: Foster, Mark Charles

(57) **Abstract**

A proportional valve includes a valve stem (244) movable toward and away from an orifice (236) for alternatively closing and opening the orifice, and regulating fluid flowing out from the orifice while in the open state. A fluidic damping volume is formed between the valve stem and a surface (304) surrounding the orifice. The damping volume, or the fluid present within the damping volume, serves as a damping mechanism for damping or resisting vibrations of the valve stem, thereby stabilizing the fluid flow.

## Description

The present invention relates generally to proportional valves, such as are utilized for controlling and regulating the flow of a fluid. More particularly, the invention relates to damping vibrations in proportional valves so as to improve the performance of such valves.

A proportional valve is utilized in many different types of systems and instruments to regulate the flow of a fluid such as a gas or liquid. Typically, the proportional valve includes a fluid inlet, a fluid outlet, and a sealable or closable orifice interposed between the inlet and outlet. The fluid enters the proportional valve through the inlet and flows through the orifice. Flow through the orifice is controlled by a valve seal attached to a valve stem that floats at a certain distance above the orifice. The valve stem is typically actuated to move the valve seal in an axial direction away from the orifice. While the orifice is open, the flow of fluid through the orifice can be adjusted by varying the distance between the valve seal and the orifice. Increasing the distance by moving the valve stem (and thus the valve seal) away from the orifice increases the flow out from the orifice, whereas decreasing the distance by moving the valve stem toward the orifice decreases the flow.

The valve stem may be actuated by mechanical, electrical, and/or magnetic means. In a typical proportional valve, the valve stem is biased toward the orifice by a spring. The valve stem is typically actuated away from the orifice against the spring-biased force via a magnetic force established by a regulated amount of voltage or current applied through a valve coil surrounding the valve stem. Accordingly, during operation of the proportional valve, the position of the valve stem is the result of a balance between the spring-loaded force and the magnetic (or other type of actuating) force that are respectively applied in opposite directions on the valve stem.

While the proportional valve is regulating fluid flow, the floating valve stem retains a certain gap between the orifice and the valve seal. This balanced position can easily be disturbed by external vibrations or oscillations, particularly vibrations transmitted in the same axial direction as the travel of the valve stem. The external vibrations may cause unwanted and uncontrollable movement of the valve stem, particularly axial translation toward and/or away from the orifice of the proportional valve. Consequently, the external vibrations may result in a disturbance in the amount of fluid flowing through the proportional valve, thereby impairing the ability of the proportional valve to accurately regulate flow.

The problems attending vibrations in proportional valves may be particularly acute in applications involving analytical, measurement, sensing, and detection instrumentation. As one example, proportional valves are often employed to regulate fluid flow in chromatographic systems. For instance, measurements made in gas chromatography (GC) techniques may be disturbed by the instability of one or more gas flows which, as evident from the foregoing discussion, may result from vibrations occurring in a proportional valve utilized to regulate gas flow in the GC apparatus. Such disturbance or instability may increase the amount of noise embodied in the detector signal. Deleterious vibrations in or transferred to the valve stem may originate from a number of sources, including, for example, a fan motor, a sampling device, or other devices operating in the surrounding area, as well as disturbances in the magnetic force acting on the valve stem of the proportional valve and vibrations induced by the flexing of mechanical springs provided in the proportional valve. Vibrations may also be induced by perturbations in the fluid flow itself.

In view of the foregoing, there is a need for eliminating, negativing, counteracting, or at least ameliorating vibrations in a proportional valve that adversely affect the regulation of fluid flow through such valve. In the context of applications involving analytical, measurement, sensing, and detection instrumentation, there is a need for increasing the accuracy of such analytical or measuring functionality by reducing flow disturbances and resultant noise.

To address the foregoing problems, in whole or in part, and/or other problems that may have been observed by persons skilled in the art, the present disclosure provides apparatus, devices, systems and/or methods relating to proportional valves, as described by way of example in implementations set forth below.

The present invention is defined in the independent claims.

According to one implementation, a proportional valve includes a valve stem including a first surface movable along a longitudinal axis, and a body including a second surface generally facing the first surface. The body has an orifice formed at the second surface and a fluid passage communicating with the orifice. The second surface extends outward from the orifice predominantly along an axis orthogonal to the longitudinal axis over a transverse distance coextensive with a substantial portion of the surface area of the first surface. The valve stem is movable from a closed position to an open position. At the closed position, at least a portion of the first surface fluidly seals the orifice. At the open position, a fluidic damping volume is formed. The fluidic damping volume has an axial dimension bounded by the first surface and the second surface, and a transverse dimension coextensive with the transverse distance of the second surface.

According to another implementation, a proportional valve includes a valve stem and a body. The body has an orifice generally facing the valve stem along the longitudinal axis and a fluid passage communicating with the orifice. The proportional valve further includes means for creating a volume of damping fluid between the valve stem and the body for damping vibrations of the valve stem while fluid is flowing from the orifice.

According to another implementation, a method for damping vibrations of a valve stem of a proportional valve is provided. The valve stem is positioned at an axial distance from an orifice of the proportional valve to establish a fluid flow path through the orifice in a direction initially toward the valve stem. A fluid is flowed through the orifice along the flow path. At least a portion of the fluid flowing form the orifice is caused to form a volume of damping fluid interposed between the valve stem and a surface surrounding the orifice, whereby the damping fluid damps vibrations of the valve stem.

Other apparatus, devices, systems, methods, features and/or advantages of the invention will be or will become apparent to one with skill in the art upon examination of the following figures and detailed description. It is intended that all such additional apparatus, devices, systems, methods, features and/or advantages be included within this description, be within the scope of the invention, and be protected by the accompanying claims.

For a better understanding of the invention, embodiments will now be described by way of example, with reference to the accompanying drawings, in which:-
Figure 1 is an elevation view in cross-section of a valve sealing region of a conventional proportional valve of the prior art.
Figure 2 is an elevation view in cross-section of an example of a proportional valve according to one implementation of the invention.
Figure 3 is a more detailed elevation view in cross-section of a valve sealing region of the proportional valve illustrated in Figure 2.
Figure 4 is a planar top view of an orifice body provided in the valve sealing region illustrated in Figure 3.
Figure 5 is a detailed elevation view in cross-section of a valve sealing region according to an example of another implementation.

As used herein, the term "fluid" generally encompasses flowable materials in either the gas phase or the liquid phase, as well as supercritical fluids and fluids that include a mixture of both gas-phase and liquid-phase components.

In general, the term "communicate" (for example, a first component "communicates with" or "is in communication with" a second component) is used herein to indicate a structural, functional, mechanical, electrical, optical, magnetic, ionic or fluidic relationship between two or more components or elements. As such, the fact that one component is said to communicate with a second component is not intended to exclude the possibility that additional components may be present between, and/or operatively associated or engaged with, the first and second components.

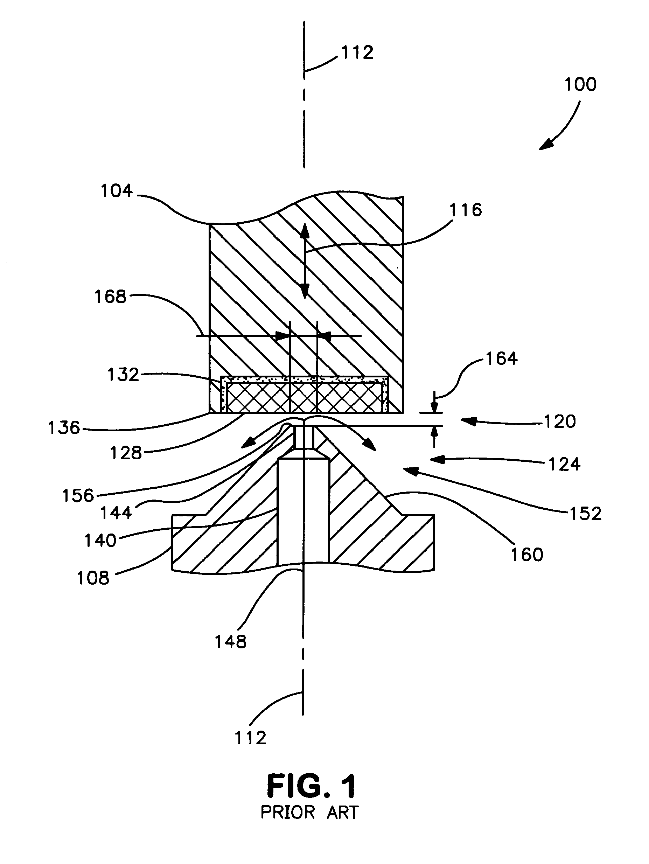

The subject matter disclosed herein generally relates to proportional valves and certain components, features, and functions related to proportional valves. Examples of implementations relating to the invention are described in more detail below with reference to Figures 1-5.

Figure 1 illustrates a valve sealing region 100 of a conventional proportional valve of the prior art. Such a proportional valve typically includes a valve stem 104 and an orifice body 108, only portions of which are illustrated in Figure 1. For purposes of reference, the valve stem 104 and orifice body 108 may be considered as being generally arranged along a longitudinal axis 112 of the valve sealing region 100. Typically, the valve stem 104 is movable along the longitudinal axis 112 during operation of the proportional valve, as indicated by arrow 116 in Figure 1, while the orifice body 108 remains stationary relative to the valve stem 104. The valve stem 104 terminates at a valve stem sealing end or side 120, and the orifice body 108 terminates at an orifice body sealing end or side 124 that generally faces the valve stem sealing side 120. The valve stem sealing end 120 is typically flat. The valve stem 104 typically includes a valve sealing element 128 disposed at the valve stem sealing end 120. The valve sealing element 128 may be constructed from a suitable resilient or elastomeric material as appreciated by persons skilled in the art. The valve stem 104 may include a recess 132 in which the valve sealing element 128 is disposed, such that the outward-facing surface of the valve sealing element 128 is generally flush with the axial end surface 136 of the valve stem 104. The outward-facing surface of the valve sealing element 128 may comprise a large portion of the valve stem sealing side 120, although often a smaller surface area of the valve sealing element 128 actually serves to cut off fluid flow while the proportional valve is in the closed position.

As further illustrated in Figure 1, an internal fluid passage 140 is formed through the orifice body 108 and communicates with an orifice 144 formed at the orifice body sealing end 124. Typically the flow of fluid through the orifice 144 occurs in the direction indicated by arrow 148. That is, fluid flows through the fluid passage 140 toward the orifice 144, exits the orifice 144, and then immediately flows into a fluid chamber 152 formed in the valve sealing region 100 of the proportional valve. Figure 1 illustrates the conventional valve in an open position that permits the illustrated fluid flow.

The orifice body sealing end 124 of the conventional orifice body 108 has a pronounced frustoconical profile. That is, the orifice body sealing side 124 includes a flat, annular valve sealing surface or valve seat 156 immediately surrounding the orifice 144, and a conical surface 160 extending downward from the valve sealing surface 156. In the open position of the conventional valve illustrated in Figure 1, the valve stem sealing end 120 and the orifice body sealing end 124 are axially separated relative to the longitudinal axis 112. In particular, the valve sealing element 128 and the valve sealing surface 156 surrounding the orifice 144 are axially separated by a gap 164. The axial width or height of the gap 164 is adjustable through the solenoid-actuated axial positioning of the valve stem 104 relative to the orifice body 108, thereby enabling the regulation of fluid flow through the orifice 144. In the fully closed position (not shown) of the proportional valve, the valve sealing element 128 contacts the valve sealing surface 156, at which position the gap 164 is eliminated.

As illustrated in Figure 1, the frustoconical profile of the conventional orifice body 108 is steep or acute. The outermost diameter of the valve sealing surface 156, indicated by arrow 168 in Figure 1, is quite small relative to the outermost diameters of the valve sealing element 128, the valve stem 104, and the conical surface 160. Moreover, the transition from the valve sealing surface 156 to the conical surface 160 is sharp or abrupt, with the angle between the conical surface 160 and the horizontal plane in which the valve sealing surface 156 lies typically being greater than about twenty degrees. As a result, the volume through which fluid flows increases rapidly as the fluid exits the orifice 144 and begins to expand into the fluid chamber 152. Consequently, very little force imparted by the fluid is available for acting on the valve stem 104, as conventional proportional valves are neither intended nor designed to utilize the fluid for such purposes. In practice, this conventional configuration cannot address the adverse effects of vibrations in the valve stem 104 discussed above.

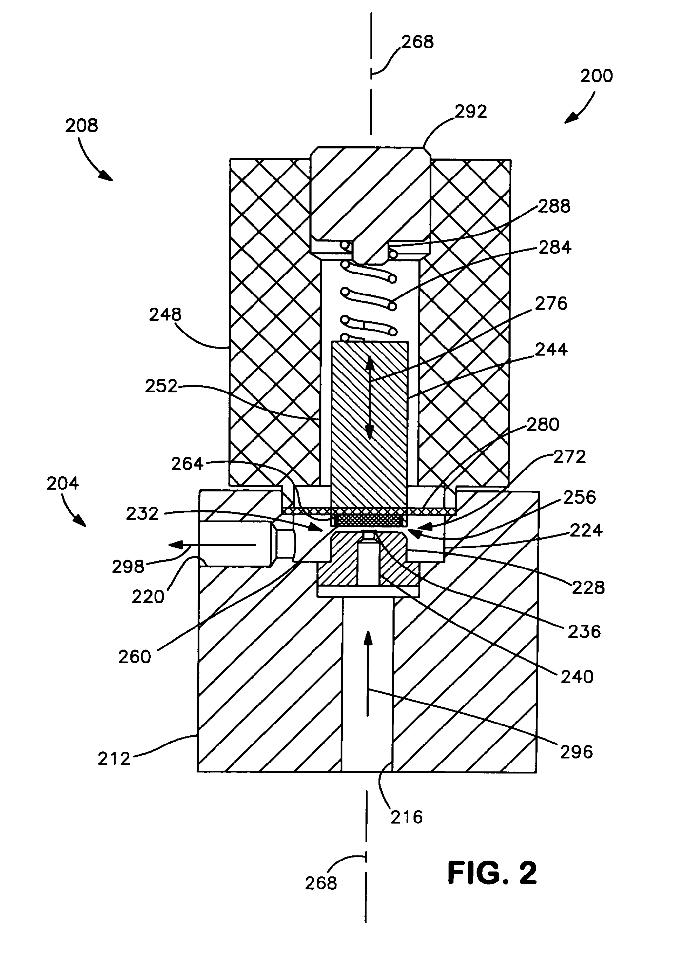

Figure 2 illustrates some of the components or features included in an example of a proportional valve 200 according to one implementation of the invention. The proportional valve 200 generally may include a fluidic valve section 204 and an actuating section 208. The valve section 204 generally includes a valve body 212. Formed in the valve body 212 are a fluid inlet port or passage 216, a fluid outlet port or passage 220, and an internal valve chamber 224 fluidly interposed between the fluid inlet port 216 and the fluid outlet port 220. An orifice body 228 is located in the valve body 212 and is disposed in the internal valve chamber 224, or at least a portion of the orifice body 228 extends into the internal valve chamber 224. The orifice body 228 may be fabricated integrally with the valve body 212, or may be a separate component that is attached to or supported by the valve body 212 by any suitable means. The orifice body 228 terminates at an orifice body sealing end or side 232. An orifice 236 is formed in the orifice body 228 at the orifice body sealing end 232 and fluidly communicates with the internal valve chamber 224. An internal passage 240 may be formed in the orifice body 228 to fluidly interconnect the orifice 236 and the fluid inlet port 216.

As further illustrated in Figure 2, the actuating section 208 of the proportional valve 200 is typically of the electromagnetic solenoid type, although in other implementations other known actuating means may be employed. In the illustrated electromagnetic-based example, the actuating section 208 includes a valve stem or plunger 244 and a solenoid coil assembly 248 coaxially disposed about the valve stem 244. As appreciated by persons skilled in the art, the coil assembly 248 may include a wire coil wrapped about a suitable support structure (not specifically shown) a number of times to produce an electromagnet. The coil assembly 248 has a hollow core or bore 252 through which the valve stem 244 axially translates in a non-contacting or at least low-friction relation to the core 252. The valve stem 244 terminates at a valve stem sealing end or side 256 that generally faces the orifice body sealing end 232. The axial end surface of the valve stem sealing end 256 facing the orifice 236 may be flat or substantially flat. The valve stem 244 may include a valve sealing element 260 disposed at the valve stem sealing end 256. The valve sealing element 260 may be constructed from a suitable resilient or elastomeric material as appreciated by persons skilled in the art. The valve sealing element 260 may be attached to the valve stem 244 by any suitable means. In the illustrated example, the valve stem 244 includes a recess 264 in which the valve sealing element 260 is disposed, such that the outward-facing surface of the valve sealing element 260 is generally flush with, or constitute a part of, the axial end surface of the valve stem sealing end 256. The outward-facing surface of the valve sealing element 260 may comprise a large portion of the total surface area of the valve stem sealing end 256.

For purposes of reference, the proportional valve 200 illustrated by example in Figure 2 may generally be considered as including a valve sealing region 272 in which the orifice 236, orifice body sealing end 232, and valve stem sealing end 256 are located. Additionally, the valve stem 244 and orifice body 228 may be considered as being generally arranged along a longitudinal axis 268 of the valve sealing region 272. As appreciated by persons skilled in the art, the valve stem 244 is movable along the longitudinal axis 268 in response to electrical energy applied to the coil assembly 248, as indicated by arrow 276 in Figure 2. The polarity of the coil assembly 248 is typically oriented such that when the coil assembly 248 is being energized by a suitable electrical source (not shown), the valve stem 244 is linearly actuated in the direction along the longitudinal axis 268 away from the orifice 236 (or upward from the perspective of Figure 2).

As further illustrated in Figure 2, the proportional valve 200 may include an annular, nominally flat spring 280. The periphery of the spring 280 may be mounted in a fixed position by appropriate structural portions of the proportional valve 200. The spring 280 coaxially surrounds and is in contact with the valve stem 244, such that the spring 280 flexes with linear translation of the valve stem 244. The spring 280 is configured and mounted so as to impart a biasing force to the valve stem 244 in the direction along the longitudinal axis 268 toward the orifice 236, i.e., in opposition to the actuating force imparted by the coil assembly 248 (or downward from the perspective of Figure 2). Accordingly, when the coil assembly 248 is in a deenergized state, the spring 280 maintains the proportional valve 200 in a closed position at which the valve sealing element 260 contacts the valve seat (if provided) surrounding the orifice 236 or at least the topmost edge of the orifice 236, thereby sealing the orifice 236 and preventing fluid flow through the proportional valve 200. The spring 280 may also function to support the valve stem 244 in a central position within the core 252 of the coil assembly 248, thus assisting in restricting movement of the valve stem 244 to linear translation along the longitudinal axis 268, without any contact with the coil assembly 248 or lateral (transverse) movement of the valve stem 244.

As further illustrated in Figure 2, the proportional valve 200 may include a control spring 284, which may, for example, be provided in the form of a compression spring such as a coiled spring. The control spring 284 may be mounted around a post or boss 288 of a control element 292 such as a screw or knob, and extends between the control element 292 and the end of the valve stem 244 remote from the orifice 236. The control element 292 may be interfaced with a structural portion of the coil assembly 248, such as by mated threads, such that rotation of the control element 292 dictates the amount of compression of the control spring 284, as appreciated by persons skilled in the art. The control spring 282 may be utilized to set the opening current of the proportional valve 200.

Figure 2 illustrates the coil assembly 248 in the energized state, which corresponds to the proportional valve 200 being "open." The electromagnetic activity of the coil assembly 248 drives the valve stem 244 upward (from the perspective of Figure 2) and away from the orifice body 228, and against the downward biasing force of the spring 280. In particular, the valve seal 260 is separated from the orifice 236 and the surrounding valve seat of the orifice body 228 by a gap along the longitudinal axis 268. In this open position, a fluid flow path is established through the proportional valve 200, from the inlet port 216 as indicated by arrow 296, through the internal passage 240 and the orifice 236, through the internal valve chamber 224, and to the outlet port 220 as indicated by arrow 298. As is characteristic of proportional valves, the magnitude of the gap between the valve sealing element 260 and the orifice 236, and thus the rate of fluid flow through the orifice 236, is a function of the axial position of the valve stem 244, which in turn is controlled by the amount of current applied to the coil assembly 248.

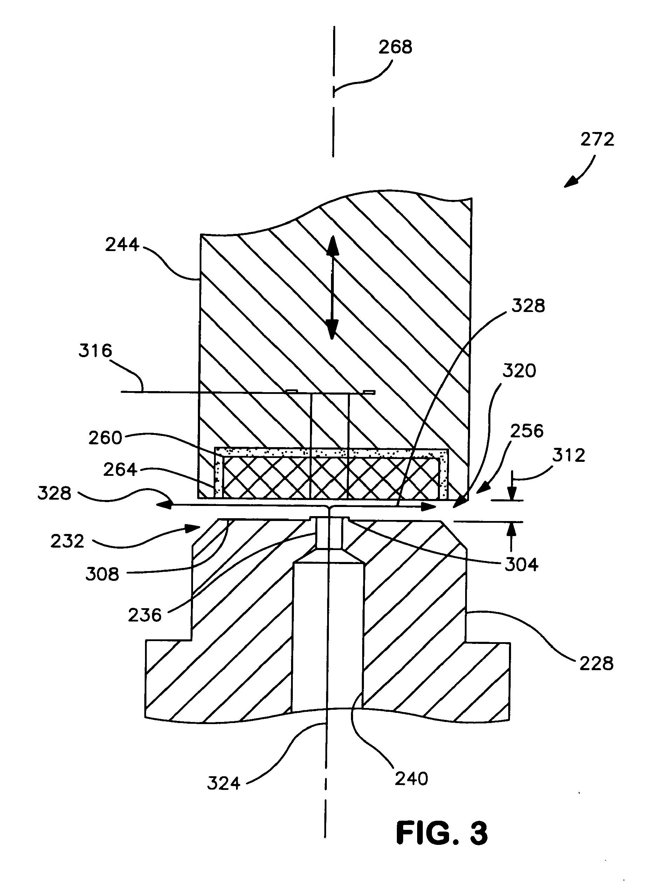

Figure 3 illustrates a more detailed view of the valve sealing region 272 of the proportional valve 200 illustrated in Figure 2. The orifice body sealing end 232 of the orifice body 228 has a substantially flat or planar profile, but with a stepped down or recessed feature. That is, the orifice body sealing end 232 includes a flat (or substantially flat), annular valve sealing surface or valve seat 304 immediately surrounding the orifice 236, and a flat (or substantially flat), recessed surface 308 annularly surrounding the valve sealing surface 304. The recessed surface 308 is recessed in the sense that the transition from the valve sealing surface 304 to the recessed surface 308 constitutes a step-down or shoulder feature. Thus, the axial distance or gap 312 between the recessed surface 308 and the end surface of the valve stem sealing end 256 (which includes the outward-facing surface of the valve sealing element 260) is greater than the axial distance between the valve sealing surface 304 and the end surface of the valve stem sealing end 256. The recessed surface 308 may also be considered as being a "lower" or "lowered" surface, relative to either the valve sealing surface 304 or the edge defining the orifice 236. In this implementation in which the recessed surface 308 is flat, the magnitude of the gap 312 is constant along directions radial to the longitudinal axis 268 (i.e., along the transverse or orthogonal axis). The outer diameter of the valve sealing surface 304, indicated by arrow 316 in Figure 3, may be slightly larger than the diameter of the orifice 236. On the other hand, the outer diameter of the recessed surface 308 may be significantly larger than the outer diameter of the valve sealing surface 304. As illustrated in Figure 3, the outer diameter of the recessed surface 308 may be equal or approximately equal to the outer diameter of the valve seal 260, such that the surface area of the recessed surface 308 is coextensive or substantially coextensive with the surface area of the valve seal 260. Alternatively, the outer diameter of the recessed surface 308 may extend further radially outward and be equal or approximately equal to the outer diameter of the valve stem 244.

As a result of the configuration illustrated in Figure 3, a fluidic damping volume or chamber 320 is defined between the recessed surface 308 of the orifice body sealing end 232 and the valve stem sealing end 256, particularly between the recessed surface 308 and the valve sealing element 260. The dimension of the fluidic damping volume 320 in the axial direction (i.e., along the longitudinal axis 268) generally corresponds to the narrow gap 312 bounded by the end surface of the valve stem sealing end 256 and the recessed surface 308, and thus varies in accordance with the travel of the valve stem 244. The transverse dimension of the fluidic damping volume 320 in the orthogonal or radial direction (i.e., perpendicular to the longitudinal axis 268) generally corresponds to the outer diameter of the recessed surface 308 (i.e., is coextensive with the surface area of the recessed surface 308). The fluidic damping volume 320 is structurally and functionally distinct from the surrounding internal valve chamber 224 (Figure 2), and is fluidly interposed between the orifice 236 and the internal valve chamber 224. Consequently, the fluidic damping volume 320 introduces a significant radial component to the path of fluid flow through an associated proportional valve such as the proportional valve 200 illustrated by example in Figure 2. In other words, the structural boundaries defining the fluidic damping volume 320 force or constrain the fluid to flow along a predominantly radial (or transverse or orthogonal) path over a distance generally corresponding to the transverse dimension of the recessed surface 308. As illustrated in Figure 3, when the proportional valve 200 is in an open (energized) state, fluid flows from the inlet port 216 (Figure 2), through the internal passage 240 of the orifice body 228, and to the orifice 236 as indicated by arrow portion 324. The fluid then exits the orifice 236 and flows into the fluidic damping volume 320. Upon exiting the orifice 236, the fluid is forced by the fluidic damping volume 320 to follow predominantly radially outward paths over a significant distance along the orthogonal axis, as indicated by arrow portions 328. The fluid eventually exits the fluidic damping volume 320 and flows into the internal valve chamber 224 and through the outlet port 220 (Figure 2) of the proportional valve 200.

From the foregoing, and referring to Figures 2 and 3, it is evident that fluid being conducted through the proportional valve 200 must fill, or expand throughout, the axially narrow fluidic damping volume 320 prior to flowing or expanding into any downstream portion of the fluid circuit provided by the proportional valve 200 (e.g., internal valve chamber 224, outlet port 220, etc.). The fluidic damping volume 320 creates a layer or film of fluid material between the recessed surface 308 of the orifice body 228 and the valve stem 244. This damping fluid layer underlies a substantial portion of the surface area of the end surface of the valve stem 244. For example, the damping fluid layer may be coextensive with over 50% of this surface area. Due to the dimensions of the fluidic damping volume 320 and the fluid mass being supported by the underlying, fixed-position recessed surface 308, this volume of fluid exerts forces in directions toward the underside (the end surface of the valve stem sealing end 256) of the floating valve stem 244. As a result, the fluidic damping volume 320 (or the layer of fluid contained in the fluidic damping volume 320) acts as damping mechanism, spring, or shock absorber for the valve stem 244. The fluidic damping volume 320 limits the amount of unwanted travel of the valve stem 244 caused by external vibrations, and thus renders the position of the valve stem 244 less sensitive to such vibrations. Accordingly, the implementation illustrated in Figure 3 results in increased stability of the fluid flow through an associated proportional valve 200 and thus increased accuracy in the proportional flow regulation provided by the proportional valve 200. It will be noted that while the forces exerted by the fluid in the fluidic damping volume 320 vary in proportion to the axial position of the valve stem 244, the fluidic damping volume 320 effectively functions as a damping mechanism throughout the entire extent of travel of the valve stem 244 during normal open conditions of the proportional valve 200.

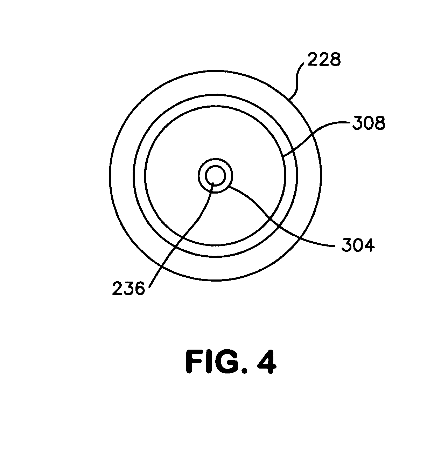

Figure 4 is a planar view of the top of the orifice body 228. Figure 4 illustrates the relative dimensions of the orifice 236, valve sealing surface 304, and recessed surface 308. The significant surface area available for supporting the above-described fluidic damping volume 320 (Figure 3) is evident.

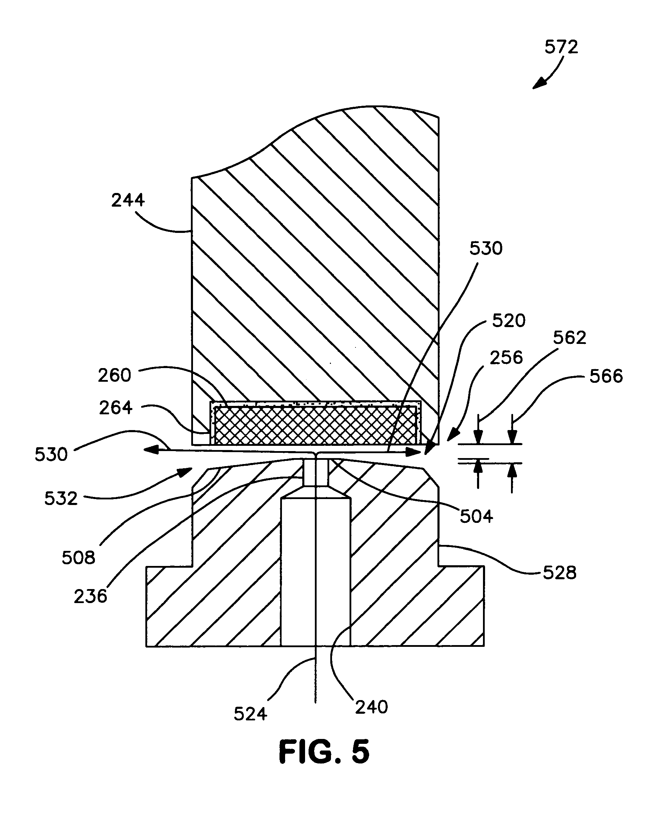

Figure 5 illustrates a valve sealing region 572 according to an example of another implementation. The valve sealing region 572 may be implemented in the proportional valve 200 illustrated by example in Figure 2 or in any other suitable proportional valve. Various components or features of the valve sealing region 572 may be similar to components or features of the valve sealing region 272 illustrated in Figure 3, and accordingly like components or features have been designated with like reference numerals where convenient.

In the example illustrated in Figure 5, an orifice body 528 includes an orifice body sealing end 532 having a slightly angled or inclined profile. That is, starting at the orifice 236 or some radial location proximal to the orifice 236, the surface of the orifice body sealing end 532 facing the valve stem 244 gradually slopes downward (from the perspective of Figure 5) away from the valve stem sealing end 256. The orifice body sealing end 532 may include an annular valve sealing surface 504 immediately surrounding the orifice 236, and which transitions to an angled or inclined surface 508 surrounding the valve sealing surface 504. In some implementations, the valve sealing surface 504 may be flat (or substantially flat) as in the case of the valve sealing surface 304 illustrated in Figure 3, or slightly angled (i.e., angled to a lesser degree than the angled surface 508), in which cases the top view of the orifice body 228 illustrated in Figure 4 may also be representative of the orifice body 528 illustrated in Figure 5.

In other implementations, the outer diameter of the valve sealing surface 504 may be only slightly greater than the diameter of the orifice 236 itself, in which case the valve sealing surface 504 may be only slightly distinguishable from the angled surface 508. In still other implementations, the valve sealing surface 504 may generally correspond to just the edge or perimeter defining the orifice 236, in which case the valve sealing surface 504 may be considered essentially non-distinguishable from the angled surface 508 or even absent from the orifice body sealing end 532 such that the portion of the valve sealing surface 504 proximate to the orifice 236 serves as the valve seat. In all such implementations, the orifice body sealing end 532 is able to effect a leak-tight seal between the orifice 236 and the valve seal 260 of the valve stem 244 when the associated proportional valve is in the closed state.

As in the case of the recessed surface 308 illustrated in Figure 3, the angled surface 508 illustrated in Figure 5 is recessed or lowered in the sense that the axial distance or gap between the angled surface 508 and the end surface of the valve stem sealing end 256 (which includes the outward-facing surface of the valve sealing element 260) is greater than the axial distance between the valve sealing surface 504 (if present) or the topmost edge of the orifice 236 and the end surface of the valve stem sealing end 256. Unlike the implementation illustrated in Figure 3, the surface 508 is angled such that the magnitude of the axial gap varies (increases) along directions radially outward from the orifice 236. Thus, as illustrated in Figure 5, the axial gap has a minimum value 562 near (at or proximal to) the orifice 236 and a maximum value 566 near (at or proximal to) the outer diameter of the angled surface 508. The angled surface 508 may be planar, substantially planar, or slightly curved or domed.

The configuration illustrated in Figure 5 forms an axially narrow fluidic damping volume or chamber 520 similar to the implementation illustrated in Figure 3, except that the axial dimension of the fluidic damping volume 520 varies along the orthogonal axis in accordance with the above-described angled or inclined profile. The fluid flow path established by the present implementation is depicted by arrow portions 524 and 530 in Figure 5. The angle of the profile is not to the degree of a steep conical profile as is conventionally provided (see, for example Figure 1). The angle between the angled surface 508 and a horizontal plane inclusive of the topmost edge of the orifice 236 is relatively small. Thus, the fluidic damping volume 520 causes the fluid to follow a predominantly radial or orthogonal path 530 over an appreciable surface area (generally coextensive with the surface area of the angled surface 508) after exiting the orifice 236 and before entering a downstream portion of the associated proportional valve. Moreover, the surface 508, while angled, is still able to support the structurally and functionally distinct fluidic damping volume 520 and enable the above-described damping function, although in the present implementation the damping function may decrease somewhat with increasing radial distance from the orifice 236.

While Figures 2-5 illustrate examples of implementations in which many of the components, or portions of their cross-sections, are cylindrical in shape and coaxial relative to the illustrated referential longitudinal axis, the invention is not limited to cylindrical or circular geometries. The invention encompasses implementations in which one or more components are polygonal in shape. Accordingly, in the broader aspects of the invention, descriptive terms such as "coaxial," "annular," "diameter," and the like may be considered as encompassing or equivalent to descriptive terms such as "surrounding," "peripheral," "outer dimension," and the like, and thus are not intended to limit a particular component or feature to having a cylindrical or circular geometry.

From the foregoing, it may be seen that implementations disclosed herein utilize structure and the fluid present in a proportional valve to provide a damping mechanism for the proportional valve. The damping mechanism may eliminate or at least ameliorate the adverse effects of vibrations on the performance of the proportional valve. When such a proportional valve is employed in connection with apparatus or processes that depend on stable fluid flow for purposes of accurate detection, measurement, etc., the damping mechanism may improve the performance of such apparatus or processes.

It will be understood that various aspects or details of the invention may be changed without departing from the scope of the invention. Furthermore, the foregoing description is for the purpose of illustration only, and not for the purpose of limitation-the invention being defined by the claims.

## Claims

1. A proportional valve, comprising:
a valve stem (244) including a first surface (256) movable along a longitudinal axis (268); and
a body (228,528) including a second surface (304,504) generally facing the first surface (256), the body (228,528) having an orifice (236) formed at the second surface (304,504) and a fluid passage (240) communicating with the orifice (236);
wherein the valve stem (244) is movable from a closed position at which at least a portion of the first surface (256) fluidly seals the orifice (236), to an open position,
**characterized in that** the second surface (304,504) extends outward from the orifice (236) predominantly along an axis orthogonal to the longitudinal axis (268) over a transverse distance coextensive with a substantial portion of the surface area of the first surface (256), and **in that**, in the open position, a fluidic damping volume is formed, the fluidic damping volume having an axial dimension (312,562,566) bounded by the first surface (256) and the second surface (304,504) and a transverse dimension coextensive with the transverse distance of the second surface (304,504).

2. The proportional valve of claim 1, wherein the transverse distance over which the second surface (304,504) extends predominantly along the orthogonal axis is coextensive with over 50% of the surface area of the first surface (256).

3. The proportional valve of claim 1 or 2, wherein the body (228) includes a valve seat surrounding the orifice (236), and the second surface (304) extends outward from the valve seat.

4. The proportional valve of claim 1, 2 or 3, wherein the second surface (304,504) is substantially flat, whereby the axial dimension of the fluidic damping volume is substantially constant along the orthogonal axis.

5. The proportional valve of claim 1,2,3 or 4, wherein the second surface (304,504) has an angled profile whereby the axial dimension of the fluidic damping volume increases from a minimum value near the orifice to a maximum value near an outermost extent of the second surface remote from the orifice.

6. The proportional valve of any one of claims 1 to 5, wherein the valve stem (244) includes a valve seal (260) forming at least a portion of the first surface (256) and aligned with the orifice (236) along the longitudinal axis (268).

7. The proportional valve of claim 6, wherein the valve seal (260) has a transverse dimension substantially equal to the transverse distance over which the second surface (304,504) extends predominantly along the orthogonal axis.

8. The proportional valve of any one of claims 1 to 7, further including a fluid chamber (224) having a volume greater than the fluidic damping volume, wherein the fluidic damping volume is fluidly interposed between the orifice (236) and the fluid chamber (224).

9. The proportional valve of any one of claims 1 to 8, wherein the body (228,528) includes a valve seat surrounding the orifice (236), and the second surface extends (304,504) outward from the valve seat and is recessed relative to the valve seat, whereby the axial dimension of the fluidic damping volume is greater than an axial distance between the first surface and the valve seat.

10. The proportional valve of any one of claims 1 to 9, wherein the body includes a valve seat surrounding the orifice (236), and the second surface extends (304,504) outward from the valve seat and has an angled profile, whereby the axial dimension of the fluidic damping volume increases from a minimum value near the valve seat to a maximum value near an outermost extent of the second surface remote from the valve seat.

11. A method for damping vibrations of a valve stem of a proportional valve, comprising:
positioning the valve stem (244) at an axial distance from an orifice (236) of the proportional valve to establish a fluid flow path through the orifice (236) in a direction initially toward the valve stem (244);
flowing a fluid through the orifice (236) along the flow path; and
**characterized by** causing at least a portion of the fluid flowing from the orifice (236) to form a volume of damping fluid interposed between the valve stem (244) and a surface (304,504) surrounding the orifice (236) body, whereby the damping fluid damps vibrations of the valve stem (244).

12. The method of claim 11, wherein the valve stem (244) includes an end surface (256) generally facing the orifice (236) and the surface (304,504) surrounding the orifice (236), and causing the portion of the fluid to form the volume of damping fluid includes forcing the fluid flowing from the orifice (236) to flow in a direction predominantly orthogonal to the direction of axial travel of the valve stem (244) for a transverse distance coextensive with a substantial portion of the end surface (256).

13. The method of claim 11 or 12, wherein the valve stem (244) includes an end surface (256) generally facing the orifice (236) and the surface (304,504) surrounding the orifice (236), and causing the portion of the fluid to form the volume of damping fluid includes constraining the fluid flowing from the orifice (236) between an axial gap between the valve stem and a surface (304,504) surrounding the orifice, the axial gap extending for a transverse distance coextensive with a substantial portion of the end surface (256).
